(19) Europäisches Patentamt
European Patent Office
Office européen des brevets

(11) **EP 3 471 413 A1**

(12) **EUROPEAN PATENT APPLICATION**

(43) Date of publication:
**17.04.2019 Bulletin 2019/16**

(51) Int Cl.:
**H04N 19/117** (2014.01)   **H04N 19/182** (2014.01)
**H04N 19/82** (2014.01)

(21) Application number: **17306359.5**

(22) Date of filing: **10.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **GALPIN, Franck**
 **35576 Cesson-Sévigné Cedex (FR)**
• **DE LAGRANGE, Philippe**
 **35576 Cesson-Sévigné Cedex (FR)**
• **BORDES, Philippe**
 **35576 Cesson-Sévigné Cedex (FR)**

(74) Representative: **Huchet, Anne et al
InterDigital CE Patent Holdings
20, rue Rouget de Lisle
92130 Issy-les-Moulineaux (FR)**

(54) **ENCODING AND DECODING METHODS AND CORRESPONDING DEVICES**

(57)  A decoding method is disclosed. A set of adaptive loop filter coefficients is decoded (S220) for each sample class of a set of N sample classes, N being an integer. Then, at least one offset is decoded (S240) for each sample class of a sub-set of the set of N sample classes, the offsets for remaining sample classes being set equal to a defined value. Each sample of a decoded block of a picture part is classified (S250) in the set of N sample classes. Finally, at least one sample of the decoded block is filtered (S260) by applying an adaptive loop filter using the adaptive loop filter coefficients of the sample class to which the sample belongs and a sample adaptive offset filter using the offset of the sample class to which the sample belongs.

FIGURE 9

EP 3 471 413 A1

**Description**

1. TECHNICAL FIELD

The present embodiments generally relate to a method and a device for picture encoding and decoding, and more particularly, to a method and a device for picture encoding and decoding with in-loop filtering, e.g. with sample adaptive offset filtering.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding. The coding and decoding schemes usually includes in-loop filtering. In HEVC, a deblocking filter is applied on reconstructed samples followed by a sample adaptive offset (SAO) filter. Adaptive loop filter (ALF) is another example of such in-loop filter. In loop filtering usually comprises sample classification and class-dependent filtering.

3. BRIEF SUMMARY

A decoding method is disclosed that comprises :

- decoding a set of adaptive loop filter coefficients for each sample class of a set of N sample classes, N being an integer;
- decoding at least one offset for each sample class of a sub-set of the set of N sample classes, the offsets for remaining sample classes being set equal to a defined value;
- classifying each sample of a decoded block of a picture part in the set of N sample classes;
- filtering at least one sample of the decoded block by applying an adaptive loop filter using the adaptive loop filter coefficients of the sample class to which the sample belongs and a sample adaptive offset filter using the offset of the sample class to which the sample belongs.

A decoding device is also disclosed that comprises :

- means for decoding a set of adaptive loop filter coefficients for each sample class of a set of N sample classes, N being an integer;
- means for decoding at least one offset for each sample class of a sub-set of the set of N sample classes, the offsets for remaining sample classes being set equal to a defined value;
- means for classifying each sample of a decoded block of a picture part in the set of N sample classes;
- means for filtering at least one sample of the decoded block by applying an adaptive loop filter using the adaptive loop filter coefficients of the sample class to which the sample belongs and a sample adaptive offset filter using the offset of the sample class to which the sample belongs.

In a variant, a decoding device is disclosed that comprises a communication interface configured to access a bitstream and at least one processor configured to:

- decode, from the accessed bitstream, a set of adaptive loop filter coefficients for each sample class of a set of N sample classes, N being an integer;
- decode, from the accessed bitstream, at least one offset for each sample class of a sub-set of the set of N sample classes, the offsets for remaining sample classes being set equal to a defined value;
- classify each sample of a decoded block of a picture part in the set of N sample classes;
- filter at least one sample of the decoded block by applying an adaptive loop filter using the adaptive loop filter coefficients of the sample class to which the sample belongs and a sample adaptive offset filter using the offset of the sample class to which the sample belongs.

The following embodiments apply to the decoding method and decoding devices disclosed above.
According to a specific characteristic, the defined value is zero.

In a specific embodiment, wherein M is an integer strictly smaller than N, the method further comprises determining the sub-set of the set of N sample classes by determining, among the N sample classes, M sample classes comprising the highest number of samples of the decoded block. The decoding devices are configured to determine the sub-set of the set of N sample classes by determining, among the N sample classes, M sample classes comprising the highest number of samples of the decoded block.

Advantageously, decoding at least one offset for each sample class of a sub-set of the set of N sample classes comprises decoding first and second offsets for each sample class of the sub-set and wherein applying a sample adaptive offset uses the first offset in the case where a number of neighbor samples with a value lower than a value of the sample is larger than a number of neighbor samples with a value larger than the value of the sample and uses the second offset otherwise.

In a specific embodiment, decoding first and second offsets for each sample class of the sub-set comprises decoding a single absolute offset value, the first offset is equal to the opposite of the single absolute offset value and the second offset is equal to the single absolute offset value.

In a specific embodiment, the method further comprises applying another sample adaptive offset filter on the samples not belonging to a sample class of the sub-set. The decoding devices are further configured to apply another sample adaptive offset filter on the samples not belonging to a sample class of the sub-set.

An encoding method is disclosed that comprises:

- classifying each sample of a reconstructed picture part in a set of N sample classes, N being an integer;
- determining and encoding a set of adaptive loop filter coefficients for each sample class of the set of N sample classes from the classified samples;
- determining and encoding at least one offset for each sample class of a sub-set of the set of N sample classes from the classified samples, the offsets for remaining sample classes being equal to a defined value;
- filtering at least one sample of a reconstructed block of the reconstructed picture part by applying an adaptive loop filter using the adaptive loop filter coefficients of the sample class to which the sample belongs and a sample adaptive offset filter using the offset of the sample class to which the sample belongs.

An encoding device is also disclosed that comprises:

- means for classifying each sample of a reconstructed picture part in a set of N sample classes, N being an integer;
- means for determining and for encoding a set of adaptive loop filter coefficients for each sample class of the set of N sample classes from the classified samples;
- means for determining and for encoding at least one offset for each sample class of a sub-set of the set of N sample classes from the classified samples, the offsets for remaining sample classes being equal to a defined value;
- means for filtering at least one sample of a reconstructed block of the reconstructed picture part by applying an adaptive loop filter using the adaptive loop filter coefficients of the sample class to which the sample belongs and a sample adaptive offset filter using the offset of the sample class to which the sample belongs.

In a variant, an encoding device is disclosed that comprises a communication interface configured to access a picture part and at least one processor configured to:

- classify each sample of a reconstructed version of the accessed picture part in a set of N sample classes, N being an integer;
- determine and encode a set of adaptive loop filter coefficients for each sample class of the set of N sample classes from the classified samples;
- determine and encode at least one offset for each sample class of a sub-set of the set of N sample classes from the classified samples, the offsets for remaining sample classes being equal to a defined value;
- filter at least one sample of a reconstructed block of the reconstructed version by applying an adaptive loop filter using the adaptive loop filter coefficients of the sample class to which the sample belongs and a sample adaptive offset filter using the offset of the sample class to which the sample belongs.

A bitstream is also disclosed that comprises a set of adaptive loop filter coefficients for each sample class of a set of N sample classes, coded data representative of at least one block of a picture part, at least one offset, for the at least one block, for each sample class of a sub-set of the set of N sample classes, the set of adaptive loop filter coefficients and the at least one offset to be used for filtering a decoded version of the block.

In a variant, a non-transitory processor readable medium having stored thereon the bitstream that is representative of the picture part is disclosed.

The following embodiments apply to the encoding method, encoding devices, bitstream and non-transitory processor readable medium disclosed above.

Advantageously, the defined value is zero.

In a specific embodiment, wherein M is an integer strictly smaller than N, the method further comprises determining the sub-set of the set of N sample classes by determining, among the N sample classes, M sample classes comprising the highest number of samples of the reconstructed block. The encoding devices are configured to determine the sub-set of the set of N sample classes by determining, among the N sample classes, M sample classes comprising the highest number of samples of the reconstructed block.

In a specific embodiment, determining and encoding at least one offset for each sample class of a sub-set of the set of N sample classes comprises determining and encoding first and second offsets for each sample class of the sub-set and wherein applying a sample adaptive offset uses the first offset in the case where a number of neighbor samples with a value lower than a value of the sample is larger than a number of neighbor samples with a value larger than the value of the sample and uses the second offset otherwise.

In a specific embodiment, encoding first and second offsets for each sample class of the sub-set comprises encoding a single absolute offset value, the first offset being equal to the opposite of the single absolute offset value and the second offset being equal to the single absolute offset value.

In a specific embodiment, the method further comprises applying another sample adaptive offset filter on the samples not belonging to a sample class of the sub-set. The encoding devices are configured to apply another sample adaptive offset filter on the samples not belonging to a sample class of the sub-set.

A computer program comprising software code instructions for performing the encoding and decoding methods when the computer program is executed by a processor is disclosed.

## 4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder adapted to execute the encoding method of figure 6A or 6B;
- Figure 3 is a pictorial example illustrating four 1-D directional patterns for EO (Edge Offset) sample classification according to the prior art;
- Figure 4 is a pictorial example illustrating BO (Band Offset) with the associated starting band position and offsets of four consecutive bands according to the prior art;
- Figure 5 is a pictorial example illustrating three diamond filter shapes for adaptive loop filtering according to the prior art;
- Figures 6A and 6B represent flowcharts of a method for encoding a picture part in a bitstream according to specific and non-limiting embodiments;
- Figure 7 represents an exemplary architecture of a receiver configured to decode a picture from a bitstream to obtain a decoded picture according to a specific and non-limiting embodiment;
- Figure 8 illustrates a block diagram of an exemplary video decoder adapted to execute the decoding method illustrated by any one of Figures 9, 10 and 12.;
- Figures 9 and 10 represent flowcharts of a method for decoding a picture part from a bitstream according to specific and non-limiting embodiments;
- Figure 11 is a pictorial example of sample neighborhoods; and
- Figure 12 represents a flowchart of a method for decoding a picture part from a bitstream according to another specific and non-limiting embodiment.

## 5. DETAILED DESCRIPTION

It is to be understood that the figures and descriptions have been simplified to illustrate elements that are relevant for a clear understanding of the present embodiments, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples (or three arrays of tri-chromatic color samples such as RGB) in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably.

Various embodiments are described with respect to the HEVC standard. However, the present embodiments are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a picture part, e.g. a slice. They may be applied to encode/decode a whole picture or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

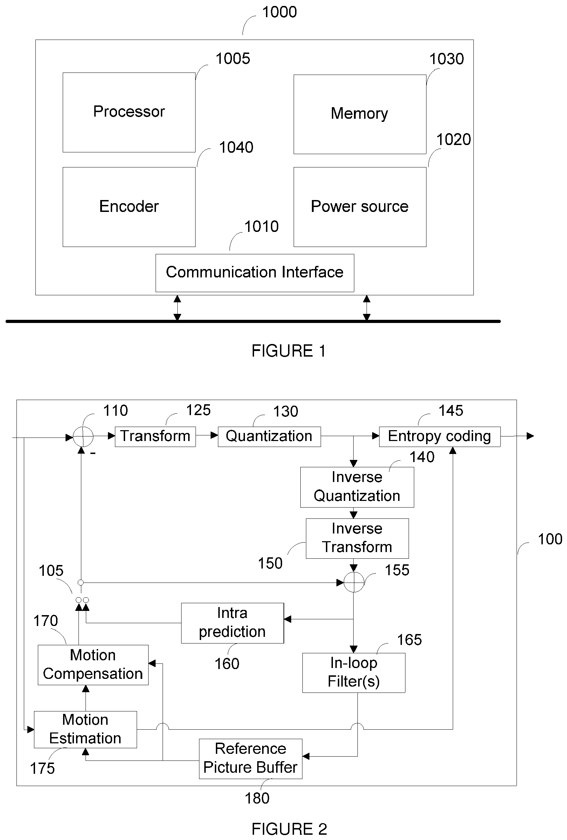

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

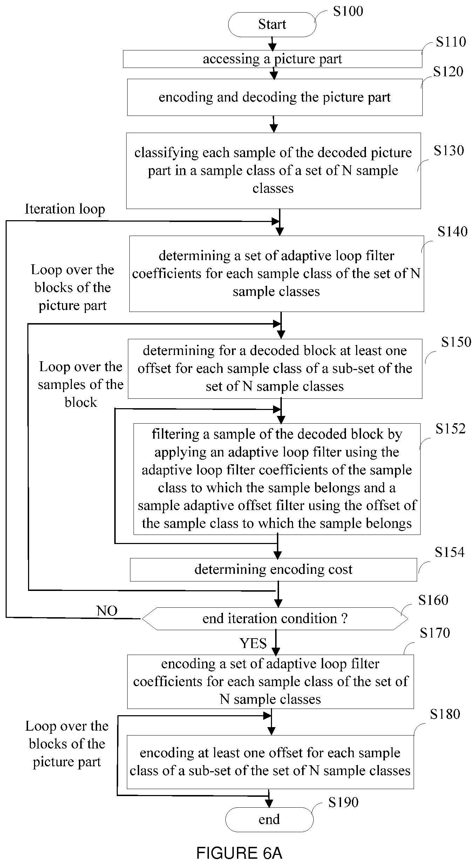

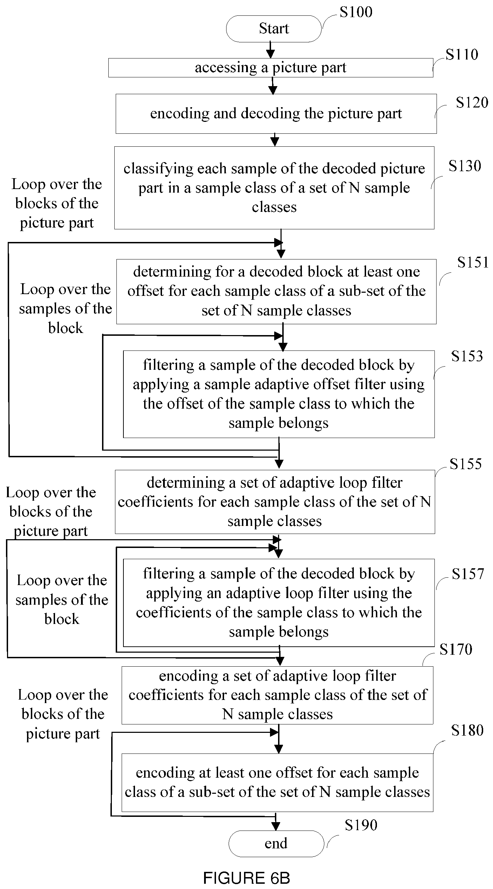

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figure 6A or 6B. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;

- a still picture server; and
- a video server (e.g. a broadcast server, a video-on-demand server or a web server).

**Figure 2** illustrates an exemplary video encoder 100, e.g. an encoder of HEVC type, adapted to execute the encoding method of figure 6A or 6B. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest CTB size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC, a CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. When an angular prediction mode is used for intra prediction, reference samples can be copied along the direction indicated by the angular prediction mode.

For an inter CU, the corresponding coding block is further partitioned into one or more prediction blocks. Inter prediction is performed on the PB level, and the corresponding PU contains the information about how inter prediction is performed. The motion information (i.e., motion vector and reference index) can be signaled in two methods, namely, "advanced motion vector prediction (AMVP)" and "merge mode". In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

The residuals are transformed (125) and quantized (130). The quantized transform coefficients, as well as motion vectors and other syntax elements, are entropy coded (145) to output a bitstream. The encoder may also skip the transform or bypass both transform and quantization, i.e., the residual is coded directly without the application of the transform or quantization process.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted sample block. An in-loop filter (165) is applied to the reconstructed picture, for example, to perform deblocking/SAO (Sample Adaptive Offset)/ALF (Adaptive Loop Filtering) filtering to reduce coding artifacts. The filtered picture may be stored in a reference picture buffer (180) and used as reference for other pictures.

In HEVC, SAO filtering may be activated or de-activated at video level, slice level and CTB level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters (i.e. the offsets, the SAO types EO, BO and inactivated, the class in case of EO and the band position in case of BO) are configured individually for each color component.

In the case where SAO filtering is activated for a CTB, the samples in the CTB are categorized into NC categories, e.g. NC=5 in HEVC. For sample s in category c(s), the sample can be adjusted to s = s + off(c(s)), where off(n) is the offset value of category n. A category is also called a class or a band in the various embodiments. In HEVC, the offsets values of only 4 (=NC-1) categories are decoded from the bitstream, the other offset values being set to 0. For BO, absolute offset values and signs are decoded. For EO, only absolute offset values are decoded, the signs being inferred from the category (positive sign for categories 1 and 2, and negative sign for categories 3 and 4).

Edge Offset

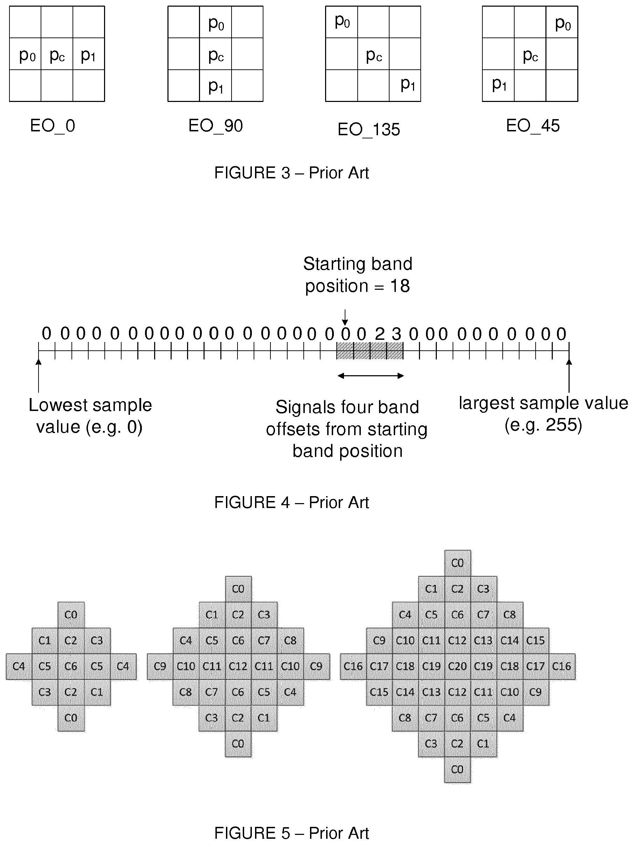

EO uses four 1-D directional patterns for sample classification: horizontal, vertical, 135° diagonal, and 45° diagonal, as shown in **Figure 3** where the label "$p_c$" represents a current sample and the labels "po" and "$p_1$" represent two neighboring samples. Four EO classes are specified based on the directions, and each EO class corresponds to one direction. The selected EO class, only one for each CTB that enables EO, is signaled in the bitstream as side information.

TABLE 1

| Category | Condition |
|---|---|
| 1 | $p_c < p_0$ and $p_c < p_1$ |
| 2 | ($p_c < p_0$ and $p_c == p_1$) or ($p_c == p_0$ and $p_c < p_1$) |
| 3 | ($p_c > p_0$ and $p_c == p_1$) or ($p_c == p_0$ and $p_c > p_1$) |
| 4 | $p_c > p_0$ and $p_c > p_1$ |
| 0 | None of the above |

For a given EO class, each sample inside the CTB is classified into one of five (NC = 5) categories based on local gradients. Specifically, the current sample value, labeled as "$p_c$," is compared with its two neighbors along the selected 1-D direction. The categorization rules for a sample are summarized in Table 1. Categories 1 and 4 are associated with a local valley and a local peak along the selected 1-D pattern, respectively, categories 2 and 3 are associated with concave and convex corners along the selected 1-D pattern, respectively. Positive offsets are used for categories 1 and 2, and negative offsets are used for categories 3 and 4.

If the current sample value does not belong to categories 1- 4 (i.e., the current sample value is the same as its two neighbors, or if $p_0 < p_c < p_1$ or $p_0 > p_c > p_1$), then it is in category 0 and SAO is not applied (i.e., offset is 0). For categories 1- 4, offsets are encoded. More precisely, the absolute values of four offsets are signaled by the encoder, one absolute value for each category. The signs of the offsets are not encoded but implicitly derived from the corresponding EO categories.

Band Offset

For BO, the range of sample values (for example, 0 - 255 in 8-bit) is uniformly split into 32 bands. A band is a category/class. One offset is added to all samples whose value belong to the same band. In HEVC, only offsets of (NC - 1) = 4 consecutive bands and the starting band position are signaled to the decoder as illustrated on Figure 4. On this figure, the starting band is the eighteenth band and the encoded offsets value are {0, 0, 2, 3}. The starting band position indicates the position of the first band with an encoded offset. One offset is coded for each of the (NC - 1) bands and the remaining bands have an offset equal to zero. When the starting band position is close to the last band position, the offset values may correspond to non-consecutive bands since the bands are managed as a circular buffer. Note for BO, those four signaled bands can be considered as four categories, and the remaining bands can be considered as another category. For BO in HEVC, offsets are encoded for four bands. More precisely, the absolute values of four offsets are signaled by the encoder, one absolute value for each of the 4 bands. The signs of the offsets are also signaled by the encoder.

In HEVC, there is no ALF. However, the in-loop filter 165 may be configured to perform ALF filtering before or after SAO. ALF is based on Wiener filters. Such filters are linear filters (1D or 2D) designed to minimize the square error between the filtered samples, and the reference ones (which are in general the original samples). Samples are first classified according to a specific criterion. Then, for each class, specific filter coefficients are applied to the samples belonging to this class. The filter coefficients are usually determined on the encoder side, e.g. by a Least Mean Square approach.

In section 2.5.2 of the document JVET-F1001 from Chen et al entitled "*Algorithm Description of Joint Exploration Test*

*Model 6 (JEM 6)*", an ALF with block based filter adaption is described. For the luma component, one among 25 filters is selected for each 2x2 block based on the direction and activity of local gradients.

Up to three diamond filter shapes (as shown in **Figure 5**) can be selected for the luma component. An index is signalled at picture level to indicate the filter shape used for the luma component of a picture. For chroma components in a picture, the 5x5 diamond filter shape is always used.

The block classification applies for each 2x2 block, i.e. each 2x2 block is categorized into one out of 25 classes. The classification is based on local signal analysis (activity, directionality, both being determined from gradients). More precisely, the class is defined as follows $C = 5D + \hat{A}$, where D is the directionality and $\hat{A}$ is a quantized value of activity. To calculate $D$ and $\hat{A}$, gradients of the horizontal, vertical and two diagonal direction are first calculated using 1-D Laplacian:

$$g_v = \sum_{k=i-2}^{i+3} \sum_{l=j-2}^{j+3} V_{k,l}, \; V_{k,l} = |2R(k,l) - R(k,l-1) - R(k,l+1)|,$$

$$g_h = \sum_{k=i-2}^{i+3} \sum_{l=j-2}^{j+3} H_{k,l}, \; H_{k,l} = |2R(k,l) - R(k-1,l) - R(k+1,l)|,$$

$$g_{d0} = \sum_{k=i-2}^{i+3} \sum_{l=j-3}^{j+3} D1_{k,l}, D1_{k,l} = |2R(k,l) - R(k-1,l-1) - R(k+1,l+1)|$$

$$g_{d1} = \sum_{k=i-2}^{i+3} \sum_{j=j-2}^{j+3} D2_{k,l}, D2_{k,l} = |2R(k,l) - R(k-1,l+1) - R(k+1,l-1)|$$

Indices *i* and *j* refer to the coordinates of the upper left sample in the 2 × 2 block and *R(i,j)* indicates a reconstructed sample at coordinate (*i,j*).

Then maximum and minimum values of the gradients of horizontal and vertical directions are set as:

$$g_{h,v}^{max} = max(g_h, g_v), \; g_{h,v}^{min} = min(g_h, g_v),$$

and the maximum and minimum values of the gradient of two diagonal directions are set as:

$$g_{d0,d1}^{max} = max(g_{d0}, g_{d1}), \; g_{d0,d1}^{min} = min(g_{d0}, g_{d1}),$$

To derive the value of the directionality D, these values are compared against each other and with two values $t_1$ and $t_2$:

**Step 1.** If both $g_{h,v}^{max} \leq t_1 \cdot g_{h,v}^{min}$ and $g_{d0,d1}^{max} \leq t_1 \cdot g_{d0,d1}^{min}$ are true, D is set to 0.

**Step 2.** If $g_{h,v}^{max}/g_{h,v}^{min} > g_{d0,d1}^{max}/g_{d0,d1}^{min}$, continue to Step 3, otherwise continue from Step 4.

**Step 3**. If $g_{h,v}^{max} > t_2 \cdot g_{h,v}^{min}$, D is set to 2, otherwise D is set to 1.

**Step 4**. If $g_{d0,d1}^{max} > t_2 \cdot g_{d0,d1}^{min}$, D is set to 4, otherwise D is set to 3.

The activity value A is calculated as:

$$A = \sum_{k=i-2}^{i+3} \sum_{l=j-2}^{j+3} \left( V_{k,l} + H_{k,l} \right).$$

$A$ is further quantized to the range of 0 to 4, inclusively, and the quantized value is denoted as $\hat{A}$.

For both chroma components in a picture, no classification method is applied, i.e. a single set of ALF coefficients is applied for each chroma component.

Before filtering each 2×2 block, geometric transformations such as rotation or diagonal and vertical flips are applied to the filter coefficients $f(k,l)$ depending on gradient values calculated for that block. This is equivalent to applying these transformations to the samples in the filter support region. The idea is to make different blocks to which ALF is applied more similar by aligning their directionality.

At decoder side, when ALF is enabled for a CU, each sample $R(i,j)$ within the CU is filtered, resulting in a sample value $R'(i,j)$ as shown in equation below, where $L$ denotes filter length, and $f(k,l)$ denotes the decoded filter coefficients.

$$R'(i,j) = \sum_{k=-L/2}^{L/2} \sum_{l=-L/2}^{L/2} f(k,l) \times R(i+k,j+l) \qquad (1)$$

The filtering process of luma component can be controlled at CU level. A flag may be signalled to indicate whether ALF is applied to the luma component of a CU. For chroma component, whether ALF is applied or not is indicated at picture level only. ALF filter parameters are signalled in the first CTU. Up to 25 sets of luma filter coefficients could be signalled. To reduce bits overhead, filter coefficients of different classification can be merged. Also, the ALF coefficients used to filter reference pictures can be reused as ALF coefficients for the current picture.

In an exemplary embodiment, the SAO and ALF uses the same sample classification in order to limit the number of sample classification processes and the number of filter passes. More precisely, the SAO filter sample classifications (BO or EO) are removed and replaced by the ALF sample classification.

**Figure 6A** represents a flowchart of a method for encoding a picture part in a bitstream according to a specific and non-limiting embodiment.

The method starts at step S100. At step S110, a transmitter 1000, e.g. such as the encoder 100, accesses a picture part, e.g. a slice. At step S120, the transmitter encodes and decodes the accessed picture part in order to obtain a reconstructed picture part. Encoding a picture part is block based. Encoding usually but not necessarily comprises, for a block of the picture part, subtracting a predictor from the block to obtain a block of residuals, transforming the block of residuals into a block of transform coefficients, quantizing the block of coefficients with a quantization step size to obtain a quantized block of transform coefficients and entropy coding the quantized block of transform coefficients in the bitstream. Reconstructing/decoding a block on the encoder side usually but not necessarily comprises de-quantizing and inverse transforming the quantized block of transform coefficients to obtain a block of residuals and adding the predictor to the block of residuals to obtain a reconstructed block.

At step S130, the transmitter classifies each sample of the reconstructed picture part in one sample class C of a set of N sample classes. In a specific embodiment, the transmitter classifies each sample s of the reconstructed block in one sample class C based on a direction of the dominant gradient. As an example, four direction gradients are computed on 3x3 local window centered on a current sample to be classified. The dominant gradient is the gradient with the highest value among the following values:

$$\mathrm{Grad0}(xc,yc) \;=\; 2 \text{ x } I(xc,yc) - I(xc\text{-}1,yc) - I(xc\text{+}1,yc)$$

$$\mathrm{Grad45}(xc,yc) = 2 \text{ x } I(xc,yc) - I(xc\text{-}1,yc\text{-}1) - I(xc\text{+}1,yc\text{+}1)$$

$$\mathrm{Grad90}(xc,yc) = 2 \text{ x } I(xc,yc) - I(xc,yc\text{-}1) - I(xc,yc\text{+}1)$$

$$\mathrm{Grad135}(xc,yc) = 2 \text{ x } I(xc,yc) - I(xc\text{-}1,yc\text{-}1) - I(xc\text{+}1,yc\text{+}1)$$

where (xc,yc) are the coordinates of the current sample and I(xc, yc) is the value of the sample. In a variant, the transmitter classifies each sample of the reconstructed block in one sample class C using ALF sample classification based on on local signal analysis (activity, directionality, both being determined from gradients). The adaptive loop filter coefficients and the offsets are then determined using an iterative process.

At step S140, the transmitter determines a set of adaptive loop filter coefficients for each sample class of the set of N sample classes by for example least square minimization method using all the samples of the picture part belonging to this sample class. The least square minimization method uses equation (2) below. At the first iteration, the offsets are set equal to 0 in the equation and at a next iteration (k), the offsets are the ones determined at step S150 at a previous iteration (k-1). As an example, the transmitter determines N sets of adaptive loop filter coefficients $\{F_C(),$ $c=1,...N\}$ corresponding to the N ALF filters associated with a current picture part, e.g. a current slice, where N is an integer. As an example, N=25. One ALF filter is associated with one class.

At step S150, the transmitter determines, for a reconstructed block of the picture part, at least one offset (absolute value and sign) for each sample class of a sub-set of the set of N sample classes, wherein the sub-set comprises M sample classes, M being an integer. In a specific embodiment, M is strictly smaller than N. Indeed, it may be inefficient to encode an offset for each sample class of said set, especially for the sample classes comprising a small number of samples. As an example, M=4. The offsets for the remaining (N-M) classes are set equal to 0. As an example, the sub-set comprises the first M sample classes among the N sample classes of the set. In this case, if C>M, then $O_c$ is set equal to a defined value. As an example, the defined value is zero. In a variant, the N classes of the set are ordered in a decreasing order of the number of samples (histogram) of the reconstructed block in each class. The sub-set comprises the M sample classes among the N sample classes that have the highest number of samples of the reconstructed block. In this latter case, any of the M sample classes has more samples than any of the remaining (N-M) classes. The offset for a sample class of the sub-set may be determined as the difference between the average of original samples belonging to class C and the average of the reconstructed samples belonging to class C filtered with coefficients determined at step S140. The receiver thus determines, for the reconstructed block, M offsets $\{O_C, c=1, ..., M\}$, namely one offset per sample class of the sub-set. In a specific embodiment, the transmitter determines a pair of offsets for each sample class of a sub-set of the set of N sample classes. M pairs of offsets $\{O_{p,c}, c=1,...M; p=0,1\}$ are thus determined.

At step S152, the transmitter filters at least one sample of the reconstructed block by applying an adaptive loop filter using the adaptive loop filter coefficients of the sample class to which the sample belongs and a sample adaptive offset filter using the offset of the sample class to which the sample belongs. For a sample $R(i,j)$ belonging to a class C, the filtered sample $R'(i,j)$ is obtained as follows:

$$R'(i,j) = \sum_{k=-\frac{L}{2}}^{\frac{L}{2}}\sum_{l=-\frac{L}{2}}^{\frac{L}{2}} F_C(k,l) \times R(i+k,j+l) + O_C \ (2)$$

(i,j) are the coordinates of the reconstructed sample, $F_c(.,.)$ are the adaptive loop filter coefficients for the sample class C and L is the filter length (filter tap). In a variant, the transmitter filters at least one sample of the reconstructed block by applying an adaptive loop filter using the adaptive loop filter coefficients of the sample class to which the sample belongs and a sample adaptive offset filter using one offset of the offset pair of the sample class to which the sample belongs. More precisely, the first offset $O_{0,c}$ is applied in the case where the sample is categorized as "valley" and the second offset $O_{1,c}$ is applied in the case where the sample is categorized as "peak". The sample categorization between "peak" and "valley" is made considering the neighborhood samples. For example, in the case where the number of sample neighbors with a value lower than the value of the current sample is larger than the number of sample neighbors with a value larger than the value of the current sample, the current sample is categorized as "peak", otherwise it is categorized as "valley".

At step S 154, a coding cost $cost_b$ is determined for the reconstructed block from the number of bits $rate_b$ required to code the offsets and from the distortion $dist_b$ (e.g. the sum of absolute difference (SAD) between filtered block samples and the original block samples): $cost_b = dist_b + \lambda.rate_b,$ where $\lambda$ is a Lagrangian multiplier as traditionally used in video codecs. The value of $\lambda$ directly controls the rate-distortion trade-off, i.e. small values of $\lambda$ correspond to high fidelities and bit rates and large values of $\lambda$ correspond to lower fidelities and bit rates. The step S 152 may be looped over the samples of the reconstructed block in order to filter the whole block. The steps S150 to S 154 may be looped over the blocks of the picture part, e.g. a slice, in order to decode/filter the whole picture part.

At step S160, the transmitter determines whether an ending condition is fulfilled. In the case where the ending condition is fulfilled the method continues to step S170. Otherwise, the method continues to step S 140 for a new iteration. The transmitter may determine a coding cost $cost_S$ for the picture part for a current iteration k. The picture part coding cost may be determined as the sum of the block coding costs $cost_b$ and of the number of bits $rate_{ALF}$ necessary to encode the adaptive loop filter coefficients:

$$Cost_S = \lambda.rate_{ALF} + \sum_{b=0}^{Nbb} Cost_b$$

Nbb is the number of blocks in the picture part.

The ending condition may be one or more of the following:

- the number of iterations exceeds a limit,
- $Cost_S$ for a current iteration k is greater than the coding cost $Cost_S$ for a previous iteration (k-1).

Finally, at steps S170 and S180, the adaptive loop filter coefficients and the offsets are encoded in the bitstream. In a specific embodiment, a single absolute offset value is encoded for a pair of offsets. In this case, the two offsets have the same absolute value equal to the encoded absolute value and their sign is derived from the sample category: the sign is positive for the offset associated with the category "valley" and the sign is negative for the offset associated with the category "peak".

The method ends at step S190.

In the embodiment of Figure 6A, the adaptive loop filter is applied before the sample adaptive offset filter. In another embodiment, the sample adaptive offset filter is applied before the adaptive loop filter as illustrated by **Figure 6B.**

In this embodiment, the encoding method is simplified since the offsets are determined first. It is no more an iterative process. The steps of the method identical to the steps of the method depicts on figure 6A are identified with the same labels.

The method comprises the steps S100 to S130. At step S151, the transmitter determines, for a reconstructed block of the picture part, at least one offset (absolute value and sign) for each sample class of a sub-set of the set of N sample classes, wherein the sub-set comprises M sample classes. M is an integer. In a specific embodiment M is strictly smaller than N. The offsets for the remaining (N-M) classes are set equal to 0. As in step S150, the sub-set comprises the first M sample classes among the N sample classes of the set or the M sample classes among the N sample classes with the highest number of samples of the reconstructed block. The offset may be determined as the difference between the average of original samples belonging to class C and the average of the reconstructed samples belonging to class C At step S 153, the transmitter filters a sample of the reconstructed block by applying a sample adaptive offset filter using the offset of the sample class to which the sample belongs. The method may loop S153 over the samples of the reconstructed block.

At step S 155, the transmitter determines a set of adaptive loop filter coefficients for each sample class of the set of N sample classes by for example least square minimization method using all the samples of the picture part belonging to this sample class. The least square minimization method uses following equation (3) with the offsets determined at step S151:

$$R'(i,j) = \sum_{k=-\frac{L}{2}}^{\frac{L}{2}}\sum_{l=-\frac{L}{2}}^{\frac{L}{2}} F_C(k,l) \times (R(i+k,j+l) + O_C) \quad (3)$$

At step S 157, the transmitter filters a sample of the reconstructed block by applying an adaptive loop filter using the coefficients of the sample class to which the sample belongs. The method may loop S157 over the samples of the reconstructed block.

The method comprises steps S170 to S190.

The receiver thus determines, for the reconstructed block, M offsets {$O_C$, c=1,...M}, namely one offset per sample class of the sub-set.

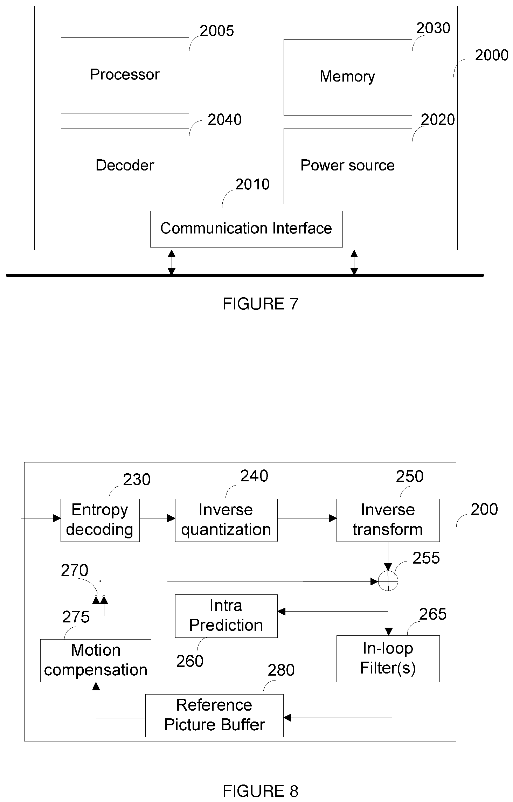

**Figure 7** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

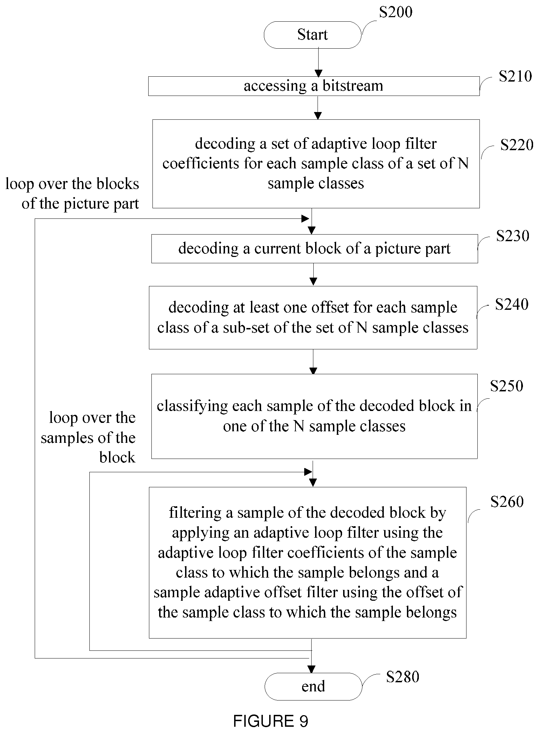

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to any one of Figures 9, 10 and 12. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 8** illustrates a block diagram of an exemplary video decoder 200, e.g. of the HEVC type, adapted to execute the decoding method described with reference to any one of Figures 9, 10 and 12. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the decoded picture. The in-loop filter may comprise a deblocking filter, a SAO filter and an ALF filter. The filtered picture is stored at a reference picture buffer (280).

**Figure 9** represents a flowchart of a method for decoding a picture part from a bitstream according to a specific and non-limiting embodiment.

The method starts at step S200. At step S210, a receiver 2000 such as the decoder 200 accesses a bitstream.

At step S220, the receiver decodes a set of adaptive loop filter coefficients for each sample class of a set of N sample classes. As an example, the receiver decodes N sets of adaptive loop filter coefficients $\{F_C(), c=1,...N\}$ corresponding to the N ALF filters associated with a current picture part, e.g. a current slice, where N is an integer. As an example, N=25. One ALF filter is associated with one class.

At step S230, the receiver decodes a current block of a picture part. Decoding a block usually but not necessarily comprises entropy decoding a portion of the bitstream representative of the block to obtain a block of transform coefficients, de-quantizing and inverse transforming the block of transform coefficients to obtain a block of residuals and adding a predictor to the block of residuals to obtain a decoded block. The decoded block may be filtered by a deblocking filter. In the following the decoded block may represent the decoded block filtered by the deblocking filter.

At step S240, the receiver decodes, for the decoded block, M offsets {$O_C$, c=1,...M}, M being an integer. In a specific embodiment, M is strictly smaller than N. More precisely, the receiver decodes, for the decoded block at least one offset (absolute value and sign) for each sample class of a sub-set of the set of N sample classes, wherein the sub-set comprises M sample classes. The offsets for the remaining (N-M) classes are set equal to 0. As an example, the sub-set comprises the first M sample classes among the N sample classes of the set. In this case, if C>M, then $O_c$ is set equal to a defined value. As an example, the defined value is zero. In a variant of S240, the N classes of the set are ordered after S250 in a decreasing order of the number of samples (histogram) of the decoded block in each class. The sub-set comprises the M sample classes among the N sample classes that have the highest number of samples of the decoded block. In this latter case, any of the M sample classes has more samples than any of the remaining (N-M) classes. The offset $O_1$ is thus associated with the class having the highest number of samples, the offset $O_2$ is associated with the next class having the highest number of samples of the decoded block and so on until the offset $O_M$. Then the (N-M) classes with the lowest numbers of samples have a null offset.

At step S250, the receiver classifies each sample of the decoded block in one sample class C of the set of N sample classes. In a specific embodiment, the receiver classifies each sample of the decoded block in one sample class C based on a direction of the dominant gradient as in the encoder side. In a variant, the receiver classifies each sample of the decoded block using ALF sample classification based on on local signal analysis (activity, directionality, both being determined from gradients).

At step S260, the receiver filters at least one sample of the decoded block by applying an adaptive loop filter using the adaptive loop filter coefficients of the sample class to which the sample belongs and a sample adaptive offset filter using the offset of the sample class to which the sample belongs. For a sample $R(i,j)$ belonging to a class C, the filtered sample $R'(i,j)$ is obtained by equation (2).

In a variant, the sample adaptive offset is applied before the adaptive loop filter. In this case, the equation (2) is modified as follows:

$$R'(i,j) = \sum_{k=-\frac{L}{2}}^{\frac{L}{2}} \sum_{l=-\frac{L}{2}}^{\frac{L}{2}} F_C(k,l) \times (R(i+k,j+l) + O_C) \quad (3)$$

The step S260 may be looped over the samples of the decoded block in order to filter the whole block. The steps S230 to S260 may be looped over the blocks of a picture part, e.g. a slice, in order to decode the whole picture part.

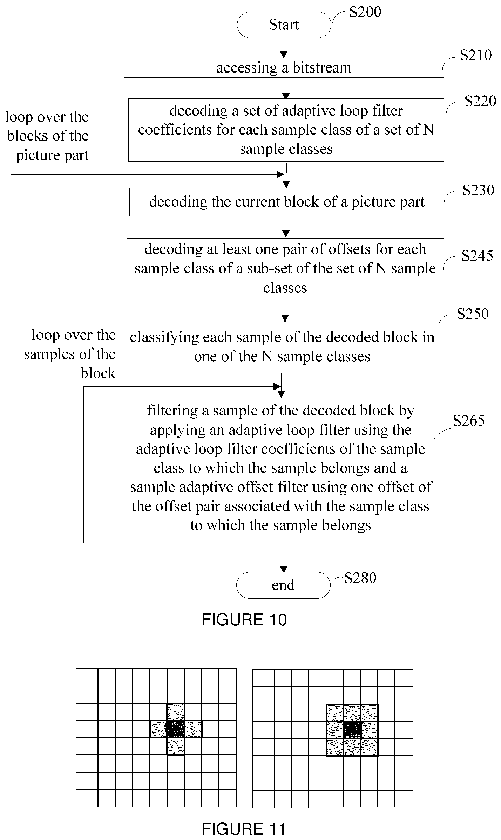

**Figure 10** represents a flowchart of a method for decoding a picture from a bitstream according to a specific and non-limiting embodiment. The steps of the method identical to the steps of the method depicts on figure 9 are identified with the same labels.

The method comprises the steps S210 to S230. At step S245, the receiver decodes, for the decoded block, M pairs of offsets {$O_{p,c}$, c=1,...M ; p=0,1}, M being an integer. In a specific embodiment, M is strictly smaller than N. More precisely, the receiver decodes a pair of offsets (a pair of absolute values and signs) for each sample class of a sub-set of the set of N sample classes, wherein the sub-set comprises M sample classes. The offset pairs for the remaining (N-M) classes are set equal to (0,0). As an example, the sub-set comprises the first M sample classes among the N sample classes of the set. In this case, if C>M, then $O_{0,c}$ =$O_{1,c}$ = 0. In a variant of S245, the N classes of the set are ordered after S250 in a decreasing order of the number of samples (histogram) of the decoded block in each class. The sub-set comprises the M sample classes among the N sample classes that have the highest number of samples of the decoded block. The offset pair ($O_{0,1}$ ; $O_{1,1}$) is thus associated with the class having the highest number of samples, the offset ($O_{0,2}$ ; $O_{1,2}$) is associated with the next class having the highest number of samples of the decoded block and so on until the offset ($O_{0,M}$ ; $O_{1,M}$). Then the (N-M) classes with the lowest numbers of samples have a zero offset pair.

In a variant of S245, a single absolute offset value is decoded for the pair of offsets. In this case, the two offsets have the same absolute value equal to the decoded absolute value and their sign is derived from the sample category: the sign is positive for the offset associated with the category "valley" and the sign is negative for the offset associated with the category "peak". The sample categorization between "peak" and "valley" is made considering the neighborhood samples. For example, in the case where the number of sample neighbors with a value lower than the value of the current sample is larger than the number of sample neighbors with a value larger than the value of the current sample, the current sample is categorized as "peak", otherwise it is categorized as "valley". The considered neighborhood can be a 3x3 square or cross region surrounding the current sample. Examples of such neighborhood are depicted on Error! Reference source not found..

The method comprises the step S250.

Then at step S275, the receiver filters at least one sample of the decoded block by applying an adaptive loop filter using the adaptive loop filter coefficients of the sample class to which the sample belongs and a sample adaptive offset filter using one offset of the offset pair of the sample class to which the sample belongs. More precisely, the first offset $O_{0,c}$

is applied in the case where the sample is categorized as "valley" and the second offset $O_{1,c}$ is applied in the case where the sample is categorized as "peak".

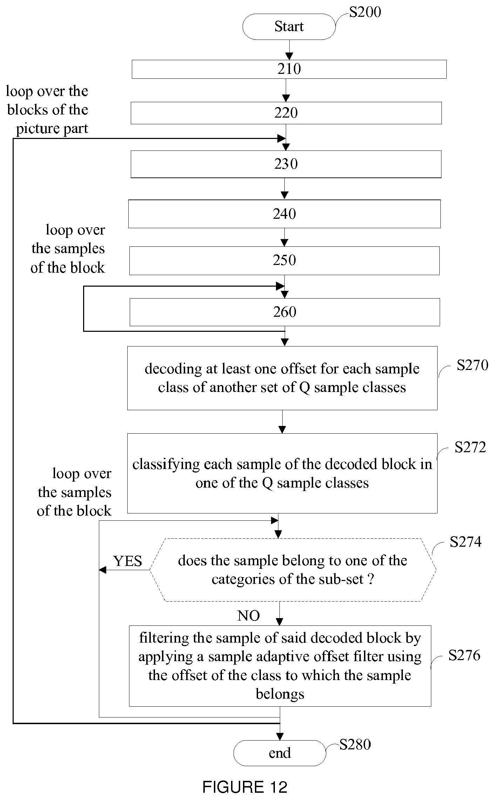

**Figure 12** represents a flowchart of a method for decoding a picture part from a bitstream according to a specific and non-limiting embodiment. The steps of the method identical to the steps of the method depicts on figure 9 are identified with the same labels.

The method comprises the steps S200 to S260 of Figure 9. In a variant not depicted, the method comprises the steps S200 to S265 of Figure 10.

At step S270, the receiver decodes, for the current block, Q additional offsets $\{O_d, d=1, ..., Q\}$. More precisely, the receiver decodes at least one offset (absolute value and sign) for each sample class of a set of Q sample classes, Q being an integer.

At step S272, the receiver classifies, each sample of the decoded block, in one of the Q sample classes. These Q sample classes are defined for an additional SAO filter to be applied after the first SAO filter of step S260. This additional per block SAO classification can be SAO Band-Offset for example or Edge-Offset and Band-Offset. The number of additional offsets and associated classification method is signaled in the PPS or the slice header or is a-priori pre-defined. This classification differs from the classification of step S250 in that it is not an ALF classification.

At step S276, the receiver filters the sample of said decoded block by applying a sample adaptive offset filter using the offset $O_d$ of the another sample class of the current sample.

The method may comprise an optional step S274. At step S274, the receiver checks whether a current sample of the decoded block belongs to one of the M classes of the sub-set defined for the first SAO filter. In the case where the current sample of the decoded block belongs to one of the M classes of the sub-set, the method continues at step S274 with a new sample of the decoded block, i.e. the sample is not filtered with the additional SAO filter. Otherwise, the method continues at step S276. Advantageously, an additional offset is added only to the samples to which no offset has been added yet, that is the samples that do not belong to one of the M classes to which an offset was added at step S260. This embodiment disclosed with respect to the decoder side may also apply symmetrically on the encoder side.

An example of syntax based on HEVC syntax is provided in Tables below. First merge flags are encoded (*sao_merge()*) indicating whether the offsets to be used are the same as the upper or the left block if available. Next, the first set of M offsets (*sao1()*) and the second set of Q offsets *(sao2())* are encoded. In this example, Q is equal to 4 and the SAO classes are the same as regular HEVC SAO classes.

| coding_tree_unit( ) { | **Descriptor** |
|---|---|
| xCtb = ( CtbAddrInRs % PicWidthInCtbsY ) << CtbLog2SizeY | |
| yCtb = ( CtbAddrInRs / PicWidthInCtbsY ) << CtbLog2SizeY | |
| if( slice_sao_luma_flag ‖ slice_sao_chroma_flag ) { | |
| sao_merge() | |
| sao1( xCtb >> CtbLog2SizeY, yCtb >> CtbLog2SizeY ) | |
| sao2( xCtb >> CtbLog2SizeY, yCtb >> CtbLog2SizeY ) | |
| } | |
| coding_quadtree( xCtb, yCtb, CtbLog2SizeY, 0 ) | |
| } | |

| sao_merge( ){ | Descriptor |
|---|---|
| if( rx > 0 ) { | |
|    leftCtbInSliceSeg = CtbAddrInRs > SliceAddrRs | |
|    leftCtbInTile = TileId[ CtbAddrInTs ] = = TileId[ CtbAddrRsToTs[ CtbAddrInRs − 1 ] ] | |
|    if( leftCtbInSliceSeg && leftCtbInTile ) | |
|      **sao_merge_left_flag** | ae(v) |
| } | |
| else | |
|    **sao_merge_left_flag** = false | |
| if( ry > 0 && !sao_merge_left_flag ) { | |
|    upCtbInSliceSeg = ( CtbAddrInRs − PicWidthInCtbsY ) >= SliceAddrRs | |
|    upCtbInTile = TileId[ CtbAddrInTs ] = = TileId[ CtbAddrRsToTs[ CtbAddrInRs − PicWidthInCtbsY ] ] | |
|    if( upCtbInSliceSeg && upCtbInTile ) | |
|      **sao_merge_up_flag** | ae(v) |
| } | |
| else | |
|    **sao_merge_up_flag** = false | |

| } | |
|---|---|

| sao1( rx, ry ){ | Descriptor |
|---|---|
| if( !sao_merge_up_flag && !sao_merge_left_flag ) | |
|   for( cIdx = 0; cIdx < 3; cIdx++ ) | |
|    if( ( slice_sao_luma_flag && cIdx = = 0 ) || ( slice_sao_chroma_flag && cIdx > 0 ) ) { | |
|     for( i = 0; i < M; i++ ) | |
|      **sao_offset_abs**[ cIdx ][ rx ][ ry ][ i ] | ae(v) |
|     for( i = 0; i < M; i++ ) | |
|      **sao_offset_sign**[ cIdx ][ rx ][ ry ][ i ] | ae(v) |
|    } | |
| } | |

| sao2( rx, ry ){ | Descriptor |
|---|---|
| if( !sao_merge_up_flag  &&  !sao_merge_left_flag ) | |
| for( cIdx = 0; cIdx < 3; cIdx++ ) | |
| if( ( slice_sao_luma_flag  &&  cIdx  = = 0 ) \|\| ( slice_sao_chroma_flag  &&  cIdx > 0 ) ) { | |
| if( cIdx  = = 0 ) | |
| **sao_type_idx_luma** | ae(v) |
| else if( cIdx  = = 1 ) | |
| **sao_type_idx_chroma** | ae(v) |
| if( SaoTypeIdx[ cIdx ][ rx ][ ry ]  != 0 ) { | |
| for( i = 0; i < 4; i++ ) | |
| **sao_offset_abs**[ cIdx ][ rx ][ ry ][ i ] | ae(v) |
| if( SaoTypeIdx[ cIdx ][ rx ][ ry ]  = = 1 ) { | |
| for( i = 0; i < 4; i++ ) | |
| if( sao_offset_abs[ cIdx ][ rx ][ ry ][ i ]  != 0 ) | |
| **sao_offset_sign**[ cIdx ][ rx ][ ry ][ i ] | ae(v) |
| **sao_band_position**[ cIdx ][ rx ][ ry ] | ae(v) |
| } else { | |
| if( cIdx  = = 0 ) | |
| **sao_eo_class_luma** | ae(v) |
| if( cIdx  = = 1 ) | |
| **sao_eo_class_chroma** | ae(v) |
| } | |
| } | |
| } | |
| } | |

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A decoding method comprising :

   - decoding (S220) a set of adaptive loop filter coefficients for each sample class of a set of N sample classes, N being an integer;
   - decoding (S240) at least one offset for each sample class of a sub-set of said set of N sample classes, the offsets for remaining sample classes being set equal to a defined value;
   - classifying (S250) each sample of a decoded block of a picture part in said set of N sample classes;
   - filtering (S260) at least one sample of said decoded block by applying an adaptive loop filter using the adaptive loop filter coefficients of the sample class to which said sample belongs and a sample adaptive offset filter using the offset of the sample class to which said sample belongs.

2. The method according to claim 1, wherein the defined value is zero.

3. The method according to claim 1 or 2, wherein, M being an integer strictly smaller than N, said method further comprises determining said sub-set of said set of N sample classes by determining, among said N sample classes, M sample classes comprising the highest number of samples of said decoded block.

4. The method according to any one of claims 1 to 3, wherein decoding at least one offset for each sample class of a sub-set of said set of N sample classes comprises decoding first and second offsets for each sample class of said sub-set and wherein applying a sample adaptive offset uses the first offset in the case where a number of neighbor samples with a value lower than a value of said sample is larger than a number of neighbor samples with a value larger than said value of said sample and uses the second offset otherwise.

5. The method according to claim 4, wherein decoding first and second offsets for each sample class of said sub-set comprises decoding a single absolute offset value, said first offset is equal to the opposite of said single absolute offset value and said second offset is equal to said single absolute offset value.

6. The method according to any one of claims 1 to 5, wherein said method further comprises applying another sample adaptive offset filter on the samples not belonging to a sample class of said sub-set.

7. An encoding method comprising:

   - classifying (S130) each sample of a reconstructed picture part in a set of N sample classes, N being an integer;
   - determining and encoding (S140, S155, S170) a set of adaptive loop filter coefficients for each sample class of said set of N sample classes from said classified samples;
   - determining and encoding (S150, S151, S180) at least one offset for each sample class of a sub-set of said set of N sample classes from said classified samples, the offsets for remaining sample classes being equal to a defined value;
- filtering (S 152, S 153, S 157) at least one sample of a reconstructed block of said reconstructed picture part by applying an adaptive loop filter using the adaptive loop filter coefficients of the sample class to which said sample belongs and a sample adaptive offset filter using the offset of the sample class to which said sample belongs.

8. The method according to claim 7, wherein the defined value is zero.

9. The method according to claim 7 or 8, wherein, M being an integer strictly smaller than N, said method further comprises determining said sub-set of said set of N sample classes by determining, among said N sample classes, M sample classes comprising the highest number of samples of said reconstructed block.

10. The method according to any one of claims 7 to 9, wherein determining and encoding at least one offset for each sample class of a sub-set of said set of N sample classes comprises determining and encoding first and second offsets for each sample class of said sub-set and wherein applying a sample adaptive offset uses the first offset in the case where a number of neighbor samples with a value lower than a value of said sample is larger than a number of neighbor samples with a value larger than said value of said sample and uses the second offset otherwise.

11. The method according to claim 10, wherein encoding first and second offsets for each sample class of said sub-set comprises encoding a single absolute offset value, said first offset being equal to the opposite of said single absolute offset value and said second offset being equal to said single absolute offset value.

12. The method according to any one of claims 7 to 11, wherein said method further comprises applying another sample adaptive offset filter on the samples not belonging to a sample class of said sub-set.

13. A decoding device comprising :

- means for decoding a set of adaptive loop filter coefficients for each sample class of a set of N sample classes, N being an integer;
- means for decoding at least one offset for each sample class of a sub-set of said set of N sample classes, the offsets for remaining sample classes being set equal to a defined value;
- means for classifying each sample of a decoded block of a picture part in said set of N sample classes;
- means for filtering at least one sample of said decoded block by applying an adaptive loop filter using the adaptive loop filter coefficients of the sample class to which said sample belongs and a sample adaptive offset filter using the offset of the sample class to which said sample belongs.

14. An encoding device comprising:

- means for classifying each sample of a reconstructed picture part in a set of N sample classes, N being an integer;
- means for determining and for encoding a set of adaptive loop filter coefficients for each sample class of said set of N sample classes from said classified samples;
- means for determining and for encoding at least one offset for each sample class of a sub-set of said set of N sample classes from said classified samples, the offsets for remaining sample classes being equal to a defined value;
- means for filtering at least one sample of a reconstructed block of said reconstructed picture part by applying an adaptive loop filter using the adaptive loop filter coefficients of the sample class to which said sample belongs and a sample adaptive offset filter using the offset of the sample class to which said sample belongs.

1000

1005

Processor

1030

Memory

1040

Encoder

1020

Power source

1010

Communication Interface

FIGURE 1

110   125   130                    145

Transform → Quantization → Entropy coding →

140

Inverse Quantization

Inverse Transform

105

150   155

Intra prediction

170

Motion Compensation

160

165

In-loop Filter(s)

Motion Estimation

175

Reference Picture Buffer

100

180

FIGURE 2

FIGURE 3 – Prior Art

FIGURE 4 – Prior Art

FIGURE 5 – Prior Art

S100

Start

S110

accessing a picture part

S120

encoding and decoding the picture part

S130

classifying each sample of the decoded picture part in a sample class of a set of N sample classes

Iteration loop

S140

Loop over the blocks of the picture part

determining a set of adaptive loop filter coefficients for each sample class of the set of N sample classes

S150

Loop over the samples of the block

determining for a decoded block at least one offset for each sample class of a sub-set of the set of N sample classes

S152

filtering a sample of the decoded block by applying an adaptive loop filter using the adaptive loop filter coefficients of the sample class to which the sample belongs and a sample adaptive offset filter using the offset of the sample class to which the sample belongs

S154

determining encoding cost

S160

NO          end iteration condition ?

YES

S170

encoding a set of adaptive loop filter coefficients for each sample class of the set of N sample classes

S180

Loop over the blocks of the picture part

encoding at least one offset for each sample class of a sub-set of the set of N sample classes

S190

end

FIGURE 6A

S100

Start

S110

accessing a picture part

S120

encoding and decoding the picture part

Loop over the blocks of the picture part

S130

classifying each sample of the decoded picture part in a sample class of a set of N sample classes

Loop over the samples of the block

S151

determining for a decoded block at least one offset for each sample class of a sub-set of the set of N sample classes

S153

filtering a sample of the decoded block by applying a sample adaptive offset filter using the offset of the sample class to which the sample belongs

Loop over the blocks of the picture part

S155

determining a set of adaptive loop filter coefficients for each sample class of the set of N sample classes

Loop over the samples of the block

S157

filtering a sample of the decoded block by applying an adaptive loop filter using the coefficients of the sample class to which the sample belongs

Loop over the blocks of the picture part

S170

encoding a set of adaptive loop filter coefficients for each sample class of the set of N sample classes

S180

encoding at least one offset for each sample class of a sub-set of the set of N sample classes

S190

end

FIGURE 6B

2005 2030

Processor                Memory

2040                              2020

Decoder                 Power source

2010

Communication Interface

2000

FIGURE 7

230              240              250

Entropy      Inverse        Inverse
decoding    quantization   transform

200

255

270

Intra
Prediction

265

275

Motion
compensation

260

In-loop
Filter(s)

280

Reference
Picture Buffer

FIGURE 8

S200

Start

accessing a bitstream — S210

decoding a set of adaptive loop filter coefficients for each sample class of a set of N sample classes — S220

loop over the blocks of the picture part

decoding a current block of a picture part — S230

decoding at least one offset for each sample class of a sub-set of the set of N sample classes — S240

classifying each sample of the decoded block in one of the N sample classes — S250

loop over the samples of the block

filtering a sample of the decoded block by applying an adaptive loop filter using the adaptive loop filter coefficients of the sample class to which the sample belongs and a sample adaptive offset filter using the offset of the sample class to which the sample belongs — S260

end — S280

FIGURE 9

Start — S200

↓

accessing a bitstream — S210

↓

loop over the blocks of the picture part

decoding a set of adaptive loop filter coefficients for each sample class of a set of N sample classes — S220

↓

decoding the current block of a picture part — S230

↓

decoding at least one pair of offsets for each sample class of a sub-set of the set of N sample classes — S245

↓

loop over the samples of the block

classifying each sample of the decoded block in one of the N sample classes — S250

↓

filtering a sample of the decoded block by applying an adaptive loop filter using the adaptive loop filter coefficients of the sample class to which the sample belongs and a sample adaptive offset filter using one offset of the offset pair associated with the sample class to which the sample belongs — S265

↓

end — S280

FIGURE 10

FIGURE 11

25

FIGURE 12

**Europäisches Patentamt**
**European Patent Office**
**Office européen des brevets**

# EUROPEAN SEARCH REPORT

Application Number

EP 17 30 6359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2013/156097 A1 (BUDAGAVI MADHUKAR [US] ET AL) 20 June 2013 (2013-06-20)<br>* abstract *<br>* figures 1-7 *<br>* paragraph [0027] - paragraph [0031] *<br>* paragraph [0061] - paragraph [0062] *<br>* paragraph [0073] *<br>* claims 1, 3 * | 1-3,6-9,<br>12-14<br>4,5,10,<br>11 | INV.<br>H04N19/117<br>H04N19/182<br>H04N19/82 |
| A | US 8 660 174 B2 (FU CHIH-MING [TW] ET AL) 25 February 2014 (2014-02-25)<br>* abstract *<br>* column 1, line 64 - column 2, line 49 *<br>* column 8, line 53 - line 67 *<br>* claim 1 * | 1-14 | |
| Y | EP 2 887 669 A1 (SAMSUNG ELECTRONICS CO LTD [KR]) 24 June 2015 (2015-06-24)<br>* paragraph [0080] - paragraph [0081] * | 4,5,10,<br>11 | |

TECHNICAL FIELDS
SEARCHED (IPC)

H04N

The present search report has been drawn up for all claims

| Place of search | Date of completion of the search | Examiner |
|---|---|---|
| The Hague | 13 March 2018 | Wedi, Thomas |

EPO FORM 1503 03.82 (P04C01)

## ANNEX TO THE EUROPEAN SEARCH REPORT
## ON EUROPEAN PATENT APPLICATION NO.                    EP 17 30 6359

This annex lists the patent family members relating to the patent documents cited in  the above-mentioned European search report.
The members are as contained in the European Patent Office EDP file on
The European Patent Office is in no way liable for these particulars which are merely given for the purpose of information.

13-03-2018

| Patent document cited in search report | Publication date | Patent family member(s) | Publication date |
|---|---|---|---|
| US 2013156097 A1 | 20-06-2013 | NONE | |
| US 8660174 B2 | 25-02-2014 | AU 2011267667 A1 | 18-10-2012 |
| | | CN 102742275 A | 17-10-2012 |
| | | EP 2458862 A2 | 30-05-2012 |
| | | EP 3082339 A1 | 19-10-2016 |
| | | KR 20130019423 A | 26-02-2013 |
| | | TW 201223291 A | 01-06-2012 |
| | | US 2011305274 A1 | 15-12-2011 |
| | | WO 2011157084 A1 | 22-12-2011 |
| EP 2887669 A1 | 24-06-2015 | AU 2012276452 A1 | 30-01-2014 |
| | | AU 2016204005 A1 | 07-07-2016 |
| | | CA 2840583 A1 | 03-01-2013 |
| | | CN 103959776 A | 30-07-2014 |
| | | CN 104980756 A | 14-10-2015 |
| | | CN 104980757 A | 14-10-2015 |
| | | CN 104980758 A | 14-10-2015 |
| | | CN 104994393 A | 21-10-2015 |
| | | CN 105049864 A | 11-11-2015 |
| | | EP 2728865 A2 | 07-05-2014 |
| | | EP 2849444 A2 | 18-03-2015 |
| | | EP 2887669 A1 | 24-06-2015 |
| | | JP 5964422 B2 | 03-08-2016 |
| | | JP 5964479 B2 | 03-08-2016 |
| | | JP 5964480 B2 | 03-08-2016 |
| | | JP 5965021 B2 | 03-08-2016 |
| | | JP 5965022 B2 | 03-08-2016 |
| | | JP 6181246 B2 | 16-08-2017 |
| | | JP 2014523183 A | 08-09-2014 |
| | | JP 2015128332 A | 09-07-2015 |
| | | JP 2015128333 A | 09-07-2015 |
| | | JP 2015128334 A | 09-07-2015 |
| | | JP 2015164331 A | 10-09-2015 |
| | | JP 2016197890 A | 24-11-2016 |
| | | KR 20130002284 A | 07-01-2013 |
| | | KR 20140075657 A | 19-06-2014 |
| | | KR 20140146559 A | 26-12-2014 |
| | | KR 20150039143 A | 09-04-2015 |
| | | KR 20150039144 A | 09-04-2015 |
| | | KR 20150041772 A | 17-04-2015 |
| | | MX 337235 B | 18-02-2016 |
| | | MX 338669 B | 27-04-2016 |
| | | MX 338670 B | 27-04-2016 |
| | | RU 2632139 C1 | 02-10-2017 |
| | | RU 2014102576 A | 10-08-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 30 6359

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2018

| Patent document cited in search report | Publication date | Patent family member(s) | Publication date |
|---|---|---|---|
| | | SG 10201408715U A | 27-02-2015 |
| | | SG 10201408716T A | 27-02-2015 |
| | | SG 10201408720T A | 29-01-2015 |
| | | SG 10201408726Q A | 27-02-2015 |
| | | TW 201309030 A | 16-02-2013 |
| | | TW 201537967 A | 01-10-2015 |
| | | TW 201640901 A | 16-11-2016 |
| | | TW 201739259 A | 01-11-2017 |
| | | US 2014192891 A1 | 10-07-2014 |
| | | US 2015131742 A1 | 14-05-2015 |
| | | US 2015139335 A1 | 21-05-2015 |
| | | US 2015163502 A1 | 11-06-2015 |
| | | US 2015163516 A1 | 11-06-2015 |
| | | US 2016337656 A1 | 17-11-2016 |
| | | WO 2013002554 A2 | 03-01-2013 |
| | | ZA 201400649 B | 26-11-2014 |

EPO FORM P0459

For more details about this annex : see Official Journal of the European Patent Office, No. 12/82